# EUROPEAN PATENT APPLICATION

(11) **EP 4 815 329 A1**
(43) Date of publication of application: **30.09.2026**
(21) Application number: 26166954.3
(22) Date of filing: 23.03.2026
(51) Int. Cl.: H04B 7/06

(54) **USER EQUIPMENT INITIATED BEAM MANAGEMENT**

(30) Priority: 27.03.2025 US 202563778568 P; 27.02.2026 US 202619552829
(71) Applicant: Apple Inc., Cupertino, CA 95014 (US)
(72) Inventor: SUN, Haitong, Cupertino, 95014 (US); BHAMRI, Ankit, Cupertino, 95014 (US); YAO, Chunhai, Cupertino, 95014 (US); YE, Chunxuan, Cupertino, 95014 (US); ZHANG, Dawei, Cupertino, 95014 (US); HE, Hong, Cupertino, 95014 (US); CHENG, Peng, Cupertino, 95014 (US); ZENG, Wei, Cupertino, 95014 (US)
(74) Representative: Zacco Denmark A/S

(57) **Abstract**

A method includes receiving a measurement resource configuration for a user equipment (UE)-initiated beam measurement event, the measurement resource configuration comprising at least one of a current beam configuration for a current beam or a new beam configuration for a new beam; and detecting, using the measurement resource configuration, that the UE-initiated beam measurement event has occurred.

## Description

### CLAIM OF PRIORITY

This application claims priority to U.S. Patent Application Serial No. 19/552,829, filed on February 27, 2026, and to U.S. Provisional Application Serial No. 63/778,568, filed on March 27, 2025, the entire contents of each of which are hereby incorporated by reference.

### BACKGROUND

Wireless communication networks provide integrated communication platforms and telecommunication services to wireless user devices. Example telecommunication services include telephony, data (e.g., voice, audio, and/or video data), messaging, and/or other services. The wireless communication networks have wireless access nodes that exchange wireless signals with the wireless user devices using one or more wireless network protocols, such as protocols described in various telecommunication standards promulgated by the ETSI Third Generation Partnership Project (3GPP). The wireless communication networks facilitate mobile broadband service using technologies such as orthogonal frequency-division multiple access (OFDMA), multiple input multiple output (MIMO), advanced channel coding, massive MIMO, beamforming, and/or other features.

Beam management, e.g., in 5^{th} Generational (5G) systems, refers to the process of selecting, maintaining, switching, and optimizing directional beams between a User Equipment (UE) and network infrastructure (e.g., a base station), particularly at higher frequencies (e.g., millimeter-wave, FR2 bands). Beam management operations include (i) beam measurement, e.g., Layer 1 (physical layer) reference signal received power (L1-RSRP), and reporting, (ii) beam indication, and (iii) beam failure recovery.

Some wireless communication systems use a Transmission Configuration Indication (TCI) framework for beam indication. This framework informs a UE how to configure spatial transmission parameters, e.g., beam-related parameters, associated with certain downlink (DL) or uplink (UL) transmissions. When the wireless systems configure a TCI state, the TCI state identifies a particular reference signal (RS), e.g., Synchronization Signal Block (SSB) or Channel State Information (CSI) RS, that the UE should use to determine the spatial characteristics (e.g., direction, beam width) of the downlink transmission. 3GPP Release 15 and Release 16 introduced a TCI framework in which different physical (PHY) channels/signals have different beam indication mechanisms, e.g., Radio Resource Control (RRC), Medium Access Control (MAC) Control Element (CE) based, and Downlink Control Information (DCI) mechanisms. In this framework, a DL channel/signal uses a TCI state and an UL channel/signal uses spatial relation. More recently, 3GPP Release 17 and Release 18 introduced a unified TCI (uTCI) framework in which single sets of TCI states are used to indicate the beams for multiple channel/signals for both DL and UL. In a first mode, called "Joint TCI," one joint TCI can be applied to both UL and DL channels/signals. In a second mode, called "Separate TCI," DL TCI is used for DL beam indication and UL TCI is used for UL beam indication.

### SUMMARY

Among other things, this disclosure describes systems and methods for supporting UE-initiated beam management. This disclosure describes measurement resource configurations that specify the configurations that enable a UE to initiate and perform beam management. This disclosure also describes Physical Uplink Control Channel (PUCCH) configurations that specify how a UE indicates to the network that a UE-initiated beam measurement report is ready to be reported by the UE.

### BRIEF DESCRIPTION OF THE FIGURES

FIG. 1 illustrates an example wireless network.
FIG. 2 illustrates an example beam configuration.
FIG. 3 illustrates a flowchart of an example method.
FIG. 4 illustrates an example user equipment (UE).
FIG. 5 illustrates an example access node.

### DETAILED DESCRIPTION

Traditionally, beam management was network initiated. In a network-initiated scheme, the network manages the beams that are being used by instructing the UE to use specific beams, e.g., by instructing the UE to use certain TCI states. More recently, UE-initiated beam management has been introduced to improve beam management procedures. In UE-initiated beam management, which has a goal of reducing signaling overhead and latency, beam management is initiated by the UE or triggered by certain events monitored by the UE. To efficiently accomplish beam management, UE-initiated beam management leverages Channel State Information (CSI) measurement and reporting frameworks. Although UE-initiated beam management has been proposed, details of implementing this beam management have not been developed.

This disclosure describes systems and methods for supporting UE-initiated beam management. This disclosure describes measurement resource configurations that specify the configurations that enable a UE to initiate and perform beam management. This disclosure also describes Physical Uplink Control Channel (PUCCH) configurations that specify how a UE indicates to the network that a UE-initiated beam measurement report is ready to be reported by the UE.

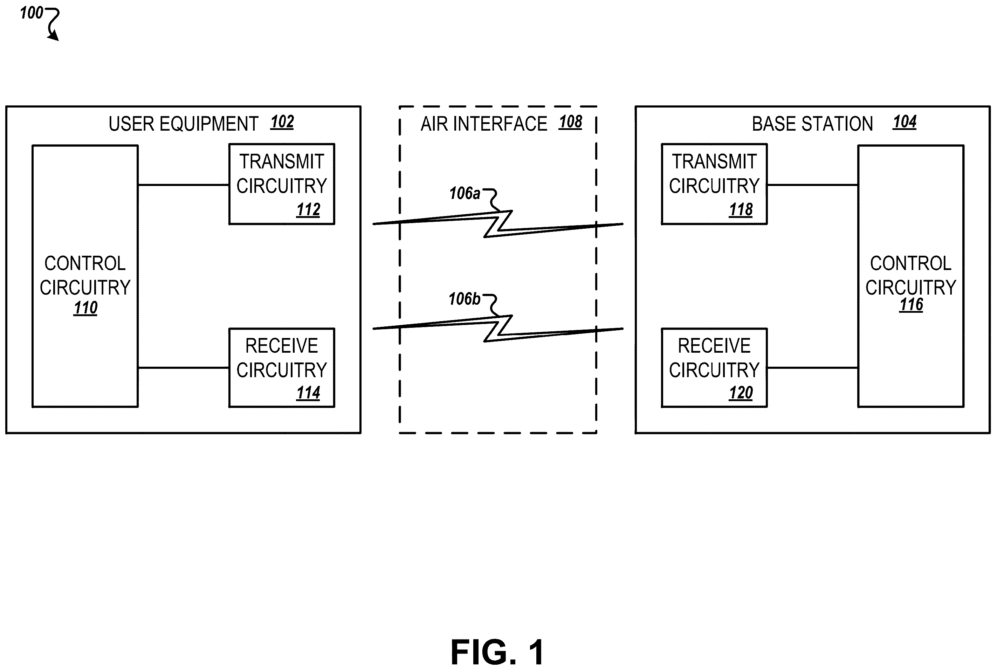

FIG. 1 illustrates an example wireless network 100. The wireless network 100 includes a UE 102 and a base station 104 connected via one or more channels 106A, 106B across an air interface 108. The UE 102 and base station 104 communicate using a system that supports controls for managing the access of the UE 102 to a network via the base station 104.

In some implementations, the wireless network 100 is a Standalone (SA) network, e.g., that incorporates Fifth Generation (5G) New Radio (NR). In some other implementations, the wireless network 100 is a Non-Standalone (NSA) network that incorporates Long Term Evolution (LTE) and 5G NR. In these implementations, the wireless network 100 may be a E-UTRA (Evolved Universal Terrestrial Radio Access)-NR Dual Connectivity (EN-DC) network, or an NR-EUTRA Dual Connectivity (NE-DC) network. Furthermore, wireless networks implementing one or more other types of communication standards are possible, including future 3GPP systems (e.g., Sixth Generation (6G)), Institute of Electrical and Electronics Engineers (IEEE) 802.11 technology, or the like. While aspects may be described herein using terminology commonly associated with 5G NR, aspects of the present disclosure can be applied to other systems, such as systems subsequent to 5G (e.g., 6G).

In the wireless network 100, the UE 102 and any other UE in the system may be, for example, any of a laptop computer, smartphone, tablet computer, machine-type device (such as smart meters or specialized devices for healthcare), intelligent transportation system, or any other wireless device. In network 100, the base station 104 provides the UE 102 network connectivity to a broader network (not shown). This UE 102 connectivity is provided via the air interface 108 in a base station service area provided by the base station 104. In some implementations, such a broader network may be a wide area network operated by a cellular network provider, or may be the Internet. Each base station service area associated with the base station 104 is supported by one or more antennas integrated with the base station 104. The service areas can be divided into a number of sectors associated with one or more particular antennas. Such sectors may be physically associated with one or more fixed antennas or may be assigned to a physical area with one or more tunable antennas or antenna settings adjustable in a beamforming process used to direct a signal to a particular sector.

The UE 102 includes control circuitry 110 coupled with transmit circuitry 112 and receive circuitry 114. The transmit circuitry 112 and receive circuitry 114 may each be coupled with one or more antennas. The control circuitry 110 may include application-specific circuitry, baseband circuitry, or any of various combinations thereof. The transmit circuitry 112 and receive circuitry 114 may be adapted to transmit and receive data, respectively, and may include radio frequency (RF) circuitry and/or front-end module (FEM) circuitry.

In various implementations, aspects of the transmit circuitry 112, receive circuitry 114, and/or control circuitry 110 may be integrated in various ways to implement the operations described herein. The control circuitry 110 may be adapted or configured to perform various operations, such as those described elsewhere in this disclosure related to a UE.

The transmit circuitry 112 can perform various operations described in this specification. Additionally, the transmit circuitry 112 may transmit using a plurality of multiplexed uplink physical channels. The plurality of uplink physical channels may be multiplexed, e.g., according to time division multiplexing (TDM) or frequency division multiplexing (FDM), and in some implementations, along with carrier aggregation. The transmit circuitry 112 may be configured to receive block data from the control circuitry 110 for transmission on the air interface 108.

The receive circuitry 114 can perform various operations described in this specification. Additionally, the receive circuitry 114 may receive a plurality of multiplexed downlink physical channels from the air interface 108 and relay the physical channels to the control circuitry 110. The plurality of downlink physical channels may be multiplexed, e.g., according to TDM or FDM, e.g., along with carrier aggregation. The transmit circuitry 112 and the receive circuitry 114 may transmit and receive, respectively, both control data and content data (e.g., messages, images, video, etc.) structured within data blocks that are carried by the physical channels.

FIG. 1 also illustrates the base station 104. In some implementations, the base station 104 may be a 5G radio access network (RAN), a next generation RAN, a E-UTRAN, a non-terrestrial cell, or a legacy RAN, such as a UTRAN. As used herein, the term "5G RAN" or the like may refer to the base station 104 that operates in an NR wireless network 100, and the term "E-UTRAN" or the like may refer to a base station 104 that operates in an LTE wireless network 100. The UE 102 utilizes connections (or channels) 106A, 106B, each of which includes a physical communications interface or layer.

The base station 104 circuitry may include control circuitry 116 coupled (directly or indirectly) with transmit circuitry 118 and/or receive circuitry 120. The transmit circuitry 118 and receive circuitry 120 may each be coupled (directly or indirectly) with one or more antennas that may be used to enable communications via the air interface 108. The transmit circuitry 118 and receive circuitry 120 may be adapted to transmit and receive data, respectively, addressed to any UE connected to the base station 104. The receive circuitry 120 may receive a plurality of uplink physical channels from one or more UEs, including the UE 102.

In FIG. 1, the one or more channels 106A, 106B are illustrated as an air interface to enable communicative coupling, and can be consistent with cellular communications protocols, such as an LTE protocol, Advanced LTE (LTE-A) protocol, LTE-based access to unlicensed spectrum (LTE-U), NR protocol, NR-based access to unlicensed spectrum (NR-U) protocol, and/or any other communications protocol(s). In some implementations, the UE 102 may directly exchange communication data via a ProSe interface. The ProSe interface may alternatively be referred to as a sidelink (SL) interface and may include one or more logical channels, including but not limited to a Physical Sidelink Control Channel (PSCCH), a Physical Sidelink Discovery Channel (PSDCH), and a Physical Sidelink Broadcast Channel (PSBCH).

In line with the discussion above, this disclosure describes systems and methods for supporting UE-initiated beam management. In some implementations, a UE is configured to monitor for one or more event types that trigger UE-initiated beam management. The event types are, for example, events that have been defined by 3GPP. Within examples, the event types include "Event 1," "Event 2," and "Event 7." Event 1 is defined as "Quality of the current beam is worse than a certain threshold." To detect this event, a UE monitors the quality of the current beam to determine whether it falls below a specified threshold. Event 2 is defined as "Quality of at least one new beam, such as L1-RSRP, becomes a threshold value better than the current beam." To detect this event, the UE monitors the quality of at least one new beam to determine whether the at least one new beam becomes a threshold value better than the quality of the current beam. And Event 7 is defined as "Quality of at least one new beam, such as L1-RSRP, becomes a threshold value better than the RS derived from the activated TCI state with the Q-th best quality." To detect this event, the UE monitors the quality of at least one new beam to determine whether the at least one new beam becomes a threshold value better than the quality of the current beam and/or one or more activated beams. Activated beams are beams that a UE monitors in addition to the current beam and to which the network can instruct the UE to switch to with low latency, e.g., using DCI.

In some implementations, a UE is configured to support performing beam management for one or more of event types. One issue that arises, however, is that a particular beam can involve more than one component carrier (CC) or serving cell. In some examples, up to 4 CCs (or serving cells) can be involved in a UE's current and new beam configuration. For instance, a first CC can be one in which an indicated TCI state is configured, a second CC can be one to which an indicated TCI state is applied, a third CC can be one that transmits a Quasi Co-Location (QCL) source of the indicated TCI state, and a fourth CC can be one that transmits a RS (e.g., SSB or CSI-RS) for the new beam.

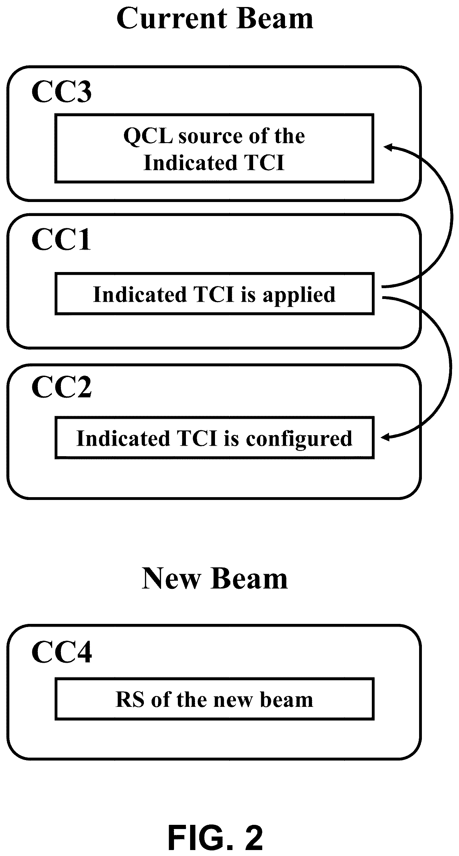

FIG. 2 illustrates an example beam configuration that involves four CCs. As shown in FIG. 2, CC1 is the CC to which an indicated TCI state is applied, CC2 is the CC in which the indicated TCI state is configured, CC3 is the CC that transmits a QCL source of the indicated TCI state, and CC4 is the CC that transmits a RS for the new beam.

In some implementations, the network uses high-level signaling, perhaps in an RRC message, e.g., CSI Report Configuration (*CSI-ReportConfig*), to configure a UE with a measurement resource configuration. For UE initiated beam management of a particular event, e.g., Event 2, the network can send the UE a beam report setting, e.g., *CSI-ReportConfig*, that includes a configuration of the current beam and a configuration of the new beam (if applicable). The features of the beam report setting can depend on the type of event for which the setting is being configured. Note that the *CSI-ReportConfig* can indicate the event type. And in some examples, a beam report setting supports more than one event type (e.g., both Event 1 and Event 2).

In some implementations, for UE initiated beam management of Event 2, the network can use one of two embodiments for the beam report setting. Because Event 2 involves a comparison of a current beam and a new beam, the two embodiments for the beam report setting include an indication of the configuration of both the current beam and the new beam.

In a first embodiment, a current beam is indicated using an existing "carrier" field in the beam report setting, e.g., *CSI-ReportConfig.* In particular, the carrier field is used to indicate the CC in which the indicated TCI state is applied (e.g., CC1). In a first option, the network selects the same CC for the reference signals of both the current beam and the new beam. In this option, the CC for the RS of the new beam is implicitly derived from the CC that transmits the QCL source of the indicated TCI state. The new beam is identified based on the derived CC. Using the example of FIG. 2, if CC3 is the CC that transmits the QCL source of the indicated TCI, then the CC for the new beam, CC4, is the same CC as CC3. Note that CC3 is derived from CC1 based on an existing (RRC) configuration. In a second option, the RS for the new beam and the RS for the current beam can be in different CCs. In this option, a new field is introduced in the beam report setting, e.g., *CSI-ReportConfig.* The new field is used to configure the CC that transmits the RS of the new beam (e.g., CC4), which can be the same as or different from the CC that transmits the RS of the current beam.

In a second embodiment, the new beam is indicated using the existing "carrier" field in the beam report setting, e.g., *CSI-ReportConfig.* In particular, the beam report setting indicates the CC in which the new beam is transmitted (e.g., CC4). In this embodiment, a new field is used to indicate the current beam. Specifically, the new field is introduced in the beam report setting, e.g., *CSI-ReportConfig,* to configure the CC to which the indicated TCI state is applied (e.g., CC1). In a first option, the network selects the same CC for the RS for the new beam and the RS for the current beam. Using the example of FIG. 2, the network can configure CC4 and CC3 to be the same. The way the network does so is by configuring CC4 in the carrier field and CC1 and in the new field. Because CC3 is derived from CC1 based on an existing (RRC) configuration, signaling CC1 (the CC to which the indicated TCI state is applied) in the beam report setting enables the UE to ultimately derive CC3. By doing so, the network selects the CC that transmits the QCL source of the current beam (e.g., CC3) to be the same as the CC that transmits the RS of the new beam (e.g., CC4). In a second option, the RS for the new beam and the RS for the current beam can be in different CCs. In this option, there is no restriction on the current beam CC configuration.

In some implementations, for UE initiated beam management of Event 1, the network can also use a beam report setting for measurement resource configuration. Because Event 1 involves a comparison of the current beam to a threshold (e.g., predetermined or configured), the beam report setting only includes an indication of the configuration of the current beam.

In some implementations, an existing "carrier" field in the CSI report setting, e.g., *CSI-ReportConfig,* indicates a current beam. In particular, the existing "carrier" field indicates the CC in which the indicated TCI state is applied (e.g., CC1). Additionally, the network may configure a new beam, which can serve one or more of the following purposes: (i) the new beam can be used to determine whether CSI-RS or Synchronization Signal Block (SSB) is used for the current beam (e.g., the new beam and the current beam may have the same RS type), and (ii) the new beam can be used to unify *CSI-ReportConfig* to support both Event 1 and Event 2 (e.g., the same *CSI-ReportConfig* can be used for both Event 1 and Event 2 to indicate the CC in which the indicated TCI state is applied). In some examples, the network may configure the new beam using a standalone message.

In some implementations, for UE initiated beam management of Event 7, the network can use one of two embodiments for the beam report setting. Because Event 7 involves a comparison of a current beam and/or one or more activated beams to a new beam, the two embodiments for the beam report setting include an indication of the measurement configuration of both the current beam(s) and the new beam.

In a first embodiment, the existing "carrier" field in the CSI report setting, e.g., *CSI-ReportConfig,* is used to indicate the CC in which the activated TCI states is applied (e.g., CC1). In a first option for signaling information of the new beam, it is assumed that the RS for the new beam is implicitly derived from the CC that transmits the QCL source of the activated TCI state. If more than one TCI state is activated (e.g., there is more than one activated beam), the network can ensure that all the activated TCI states have their respective QCL sources in the same CC. Alternatively, different activated TCI states can have different QCL sources. Here, a new field is introduced in the beam report setting, e.g., *CSI-ReportConfig,* to configure which activated TCI state is used to derive the CC for the new beam. In a second option for signaling information of the new beam, the RS for the new beam and the RS for the current beam can be in different CCs. In this option, a new field is introduced in the beam report setting, e.g., *CSI-ReportConfig,* to configure the CC that transmits the RS of the new beam (e.g., CC4).

In a second embodiment, the existing "carrier" field in the CSI report setting, e.g., *CSI-ReportConfig,* is used to indicate the CC in which the new beam is transmitted (e.g., CC4). For signaling information associated with the current beam, a new field is introduced in the CSI report setting, e.g., *CSI-ReportConfig,* to configure the CC to which the activated TCI state is applied (e.g., CC1). In a first option, the network requires the RS for the new beam and the RS for the current beam to be in the same CC, with at least one of the following restrictions. One, the QCL sources of all the activated TCI states are in the same CC. Two, the QCL source of one activated TCI state is in the same CC as the CC that transmits the RS of the new beam. In a second option, the RS for the new beam and the RS for the current beam can be in different CCs. In this option, there is no restriction on the current CC configuration.

In some implementations, for UE initiated beam management Event 2 and Event 7, the measurement resource configuration can also include information indicative of the periodicity of the new beam and current beam. In a first option, the network configures the same periodicity between the new beam and the current beam. In a second option, the network configures different periodicity between the new beam and the current beam. In some examples, the periodicity of the new beam and the current beam are integer multiples of each other. Alternatively, in other examples, there may be no restrictions on the periodicity of the new beam and the current beam (e.g., they do not have to be integer multiples of each other).

In some implementations, for UE initiated beam management Event 2 and Event 7, the measurement resource configuration can include comparison evaluation periodicity, perhaps to be used in scenarios when the periodicity of the new beam and current beam are not the same. In a first option, the comparison evaluation periodicity takes the smallest periodicity of the periodicities. In a second option, the comparison evaluation periodicity takes the greatest periodicity of the periodicities. In a third option, the comparison evaluation periodicity takes the Least Common Multiple (LCM) of the periodicities. In a fourth option, the comparison evaluation periodicity is fixed in the specification, e.g., 20 milliseconds (ms). In a fifth option, the comparison evaluation periodicity is separately configured by the network.

In some implementations, the UE is configured to use PUCCH is to trigger the UE initiated beam report for UE initiated beam management. In particular, the UE is configured to use an RRC parameter (e.g., *firstPUCCHResourceConfig)* dedicated to periodic PUCCH resource configuration. In some examples, the first PUCCH (e.g., *firstPUCCHResourceConfig)* is configured as PUCCH format 0 or PUCCH format 1. PUCCH format 0 and format 1 can be used to carry 1-3 bits information.

In some implementations, the UE is configured with collision handling rules for the first PUCCH. In some examples, the UE may be configured with one of one or more options for handling a first PUCCH channel collision with a regular scheduling request (SR). In a first option, the first PUCCH channel has higher priority. In a second option, the SR has higher priority. Note that when the PUCCH channel or the SR has higher priority, the corresponding PUCCH resource with the higher priority is selected. In particular, the uplink control information (UCI) indicates the corresponding PUCCH request with higher priority. If there are *K*₁ SR configured and *K*₂ PUCCH resources configured for the UE initiated beam management, then the total bits reserved is $\left⌈{log}_{2}\left({K}_{1}+{K}_{2}+1\right)\right⌉$, which is used to indicate which PUCCH resource has higher priority and is triggered. The *K*₂ PUCCH resources can be ordered before or after the *K*₁ SR.

In some examples, the UE may be configured with one of one or more options for handling a first PUCCH channel collision with a Link Recovery Request (LRR) SR. In a first option, the regular LRR SR has higher priority. In a second option, the first PUCCH channel has higher priority.

In some implementations, the UE may be configured with one of one or more options for handling collisions of different events. In a first option, the priority is hardcoded in specification. Within examples, the following priorities are possible:
- Event 2 > Event 1 > Event 7
- Event 2 > Event 7 > Event 1
- Event 1 > Event 2 > Event 7
- Event 1 > Event 7 > Event 2
- Event 7 > Event 1 > Event 2
- Event 7 > Event 2 > Event 1
In a second option, the network configures the priority.

In some implementations, the UE may be configured with one or more options for handling the collision of the first PUCCH channel and a scheduled PUSCH. In a first option, first PUCCH channel has higher priority. In a second option, the dynamically scheduled PUSCH has higher priority. In some implementations, the UE may be configured with one of one or more options for handling the collision of the first PUCCH channel and a Type 1 CG (Configured Grant) PUSCH. In a first option, first PUCCH channel has higher priority. In a second option, the Type 2 CG PUSCH has higher priority. In some implementations, the UE may be configured with one of one or more options for handling the collision of the first PUCCH channel and a Type 2 CG PUSCH. In a first option, the first PUCCH channel has higher priority. In a second option, the Type 2 CG PUSCH has higher priority.

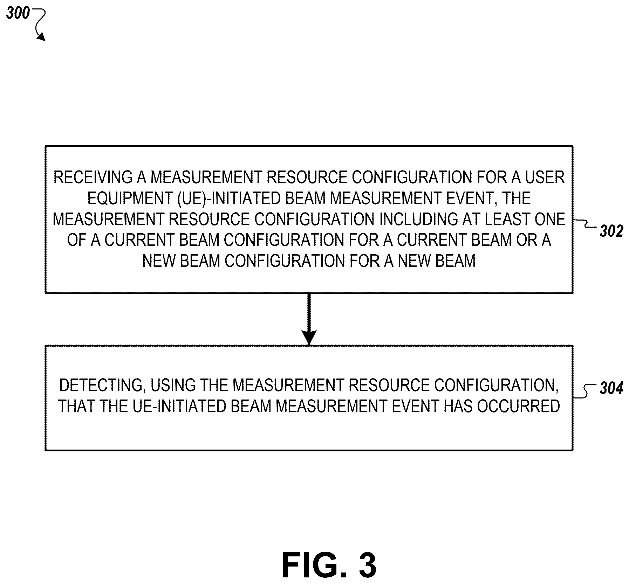

FIG. 3 illustrates a flowchart of an example method 300, according to some implementations. For clarity of presentation, the description that follows generally describes method 300 in the context of the other figures in this description. For example, method 300 can be performed by UE 102 of FIG. 1. It will be understood that method 300 can be performed, for example, by any suitable system, environment, software, hardware, or a combination of systems, environments, software, and hardware, as appropriate. In some implementations, various steps of method 300 can be run in parallel, in combination, in loops, or in any order.

At step 302, method 300 involves receiving a measurement resource configuration for a user equipment (UE)-initiated beam measurement event, the measurement resource configuration including at least one of a current beam configuration for a current beam or a new beam configuration for a new beam.

At step 304, method 300 involves detecting, using the measurement resource configuration, that the UE-initiated beam measurement event has occurred.

In some implementations, the UE-initiated beam measurement event is when a quality of the new beam becomes a threshold value better than the current beam.

In some implementations, the current beam configuration is indicated in a carrier field of the measurement resource configuration, and wherein the current beam configuration comprises a first component carrier in which an indicated Transmission Configuration Indicator (TCI) state is applied.

In some implementations, the method further involves: deriving, from the first component carrier, a second component carrier that transmits a Quasi Co Location (QCL) source of the indicated TCI state; deriving, based on a determination that reference signals for the current beam and the new beam are in the same component carrier, a third component carrier for the new beam from the second component carrier.

In some implementations, the third component carrier and the second component carrier are the same.

In some implementations, the new beam configuration is indicated in a dedicated field of the measurement resource configuration.

In some implementations, the new beam configuration is indicated in a carrier field of the measurement resource configuration, and wherein the current beam configuration is indicated in a dedicated field of the measurement resource configuration.

In some implementations, a reference signal for the new beam and a reference signal for the current beam are in the same component carrier.

In some implementations, the UE-initiated beam measurement event is when a quality of the current beam is worse than a predetermined threshold.

In some implementations, the current beam configuration is indicated in a carrier field of the measurement resource configuration.

In some implementations, the UE-initiated beam measurement event is when quality of the new beam becomes a threshold value better than a reference signal derived from an activated Transmission Configuration Indicator (TCI) state.

In some implementations, the activated TCI state configuration is indicated in a carrier field of the measurement resource configuration, and wherein the acti activated TCI state configuration comprises a first component carrier in which the activated TCI state is applied.

In some implementations, the method further involves: deriving, from the first component carrier, a second component carrier that transmits a Quasi Co Location (QCL) source of the activated TCI state; deriving, based on a determination that reference signals for the activated TCI state and the new beam are in the same component carrier, a third component carrier for the new beam from the second component carrier.

In some implementations, the third component carrier and the second component carrier are the same.

In some implementations, the new beam configuration is indicated in a dedicated field of the measurement resource configuration.

In some implementations, the new beam configuration is indicated in a carrier field of the measurement resource configuration, and wherein the current beam configuration is indicated in a dedicated field of the measurement resource configuration.

In some implementations, a reference signal for the new beam and a reference signal for the current beam are in the same component carrier.

In some implementations, the UE-initiated beam measurement event involves a comparison of the current beam and the new beam, and wherein the measurement resource configuration further comprises a respective periodicity of the current beam and a respective periodicity of the new beam.

In some implementations, the respective periodicity of the current beam is the same the respective periodicity of the new beam.

In some implementations, the respective periodicity of the current beam is different from the respective periodicity of the new beam, wherein the periodicity of the new beam and the current beam are integer multiples of each other.

In some implementations, the respective periodicity of the current beam is different from the respective periodicity of the new beam, and the method further involves: determining comparison evaluation periodicity based on: a smallest periodicity in the measurement resource configuration; a largest periodicity in the measurement resource configuration; a Least Common Multiple (LCM) of the respective periodicities in the measurement resource configuration; a predetermined value; or a configuration received from a network.

In some implementations, the method further involves: responsive to detecting that the UE-initiated beam measurement event has occurred, sending to a base station an indication of the detection in a first Physical Uplink Control Channel (PUCCH) channel.

In some implementations, the first PUCCH channel has a format of PUCCH format 0 or PUCCH format 1.

In some implementations, the UE is configured with one or more collision rules for the first PUCCH channel.

In some implementations, the one or more collision rules comprise a collision rule for a collision between the first PUCCH channel and a regular scheduling request (SR).

In some implementations, the one or more collision rules comprise a collision rule for a collision between the first PUCCH channel and a Link Recovery Request (LRR) scheduling request.

In some implementations, the one or more collision rules comprise a collision rule for a collision between the UE-initiated beam measurement event and one or more other UE-initiated beam measurement events.

In some implementations, the one or more collision rules comprise collision rules for collisions between the first PUCCH channel and: (i) a dynamically scheduled PUSCH, or (ii) a configured grant scheduled PUSCH.

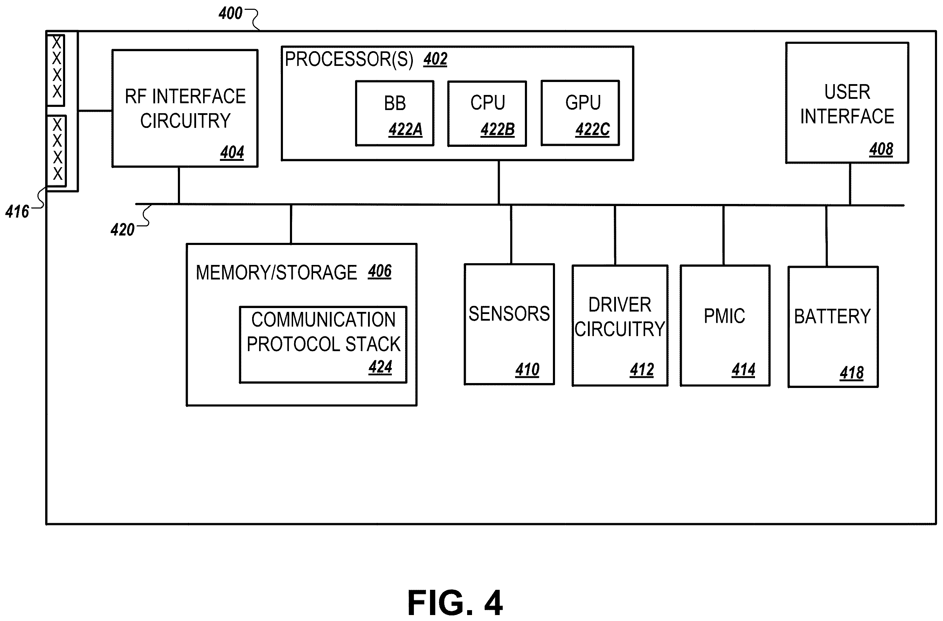

FIG. 4 illustrates an example UE 400. The UE 400 may be similar to and substantially interchangeable with UE 102 of FIG. 1.

The UE 400 may be any mobile or non-mobile computing device, such as, for example, a mobile phone, computer, tablet, industrial wireless sensors, video device (for example, cameras, video cameras, etc.), wearable devices (for example, a smart watch), relaxed-IoT devices, etc.

The UE 400 may include any/all of processor 402, RF interface circuitry 404, memory/storage 406, user interface 408, sensors 410, driver circuitry 412, power management integrated circuit (PMIC) 414, one or more antenna(s) 416, and battery 418. The components of the UE 400 may be implemented as integrated circuits (ICs), portions thereof, discrete electronic devices, or other modules, logic, hardware, software, firmware, or a combination thereof. The block diagram of FIG. 4 is intended to show a high-level view of some of the components of the UE 400. However, some of the components shown may be omitted, additional components may be present, and a different arrangement of the components shown may occur in other implementations.

The components of the UE 400 may be coupled with various other components over one or more interconnects 420, which may represent any type of interface, input/output, bus (local, system, or expansion), transmission line, trace, optical connection, etc., that allows various circuit components (on common or different chips or chipsets) to interact with one another.

The processor 402 may include one or more processors. For example, the processor 402 may include processor circuitry such as, for example, baseband processor circuitry (BB) 422A, central processor unit circuitry (CPU) 422B, and graphics processor unit circuitry (GPU) 422C. The processor 402 may include any type of circuitry or processor circuitry that executes or otherwise operates computer-executable instructions, such as program code, software modules, or functional processes from memory/storage 406 to cause the UE 400 to perform operations as described herein.

In some implementations, the baseband processor circuitry 422A may access a communication protocol stack 424 in the memory/storage 406 to communicate over a 3GPP compatible network. In general, the baseband processor circuitry 422A may access the communication protocol stack to: perform user plane functions at a physical (PHY) layer, medium access control (MAC) layer, radio link control (RLC) layer, packet data convergence protocol (PDCP) layer, service data adaptation protocol (SDAP) layer, and PDU layer; and perform control plane functions at a PHY layer, MAC layer, RLC layer, PDCP layer, RRC layer, and a non-access stratum layer. In some implementations, the PHY layer operations may additionally/alternatively be performed by the components of the RF interface circuitry 404. The baseband processor circuitry 422A may generate or process baseband signals or waveforms that carry information in 3GPP-compatible networks. In some implementations, the waveforms for NR may be based cyclic prefix orthogonal frequency division multiplexing (OFDM) "CP-OFDM" in the uplink or downlink, and discrete Fourier transform spread OFDM "DFT-S-OFDM" in the uplink.

The memory/storage 406 may include one or more non-transitory, computer-readable media that includes instructions (for example, communication protocol stack 424) that may be executed by the processor 402 to cause the UE 400 to perform various operations described herein. The memory/storage 406 include any type of volatile or non-volatile memory that may be distributed throughout the UE 400. In some implementations, some of the memory/storage 406 may be located on the processor 402 itself (for example, L1 and L2 cache), while other memory/storage 406 is external to the processor 402 but accessible thereto via a memory interface. The memory/storage 406 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 404 may include transceiver circuitry and radio frequency front module (RFEM) that allows the UE 400 to communicate with other devices over a radio access network. The RF interface circuitry 404 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna(s) 416 and proceed to filter and amplify (with a low-noise amplifier) the signal. The signal may be provided to a receiver of the transceiver that downconverts the RF signal into a baseband signal that is provided to the baseband processor.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna(s) 416. In various implementations, the RF interface circuitry 404 may be configured to transmit/receive signals in a manner compatible with NR access technologies.

The antenna(s) 416 may include one or more antenna elements to convert electrical signals into radio waves to travel through the air and to convert received radio waves over the air into electrical signals. In some implementations, the antenna elements may be arranged into one or more antenna panels. The antenna(s) 416 may have antenna panels that are omnidirectional, directional, or a combination thereof, to enable beamforming and multiple input, multiple output communications. The antenna(s) 416 may include any/all of microstrip antennas, printed antennas fabricated on the surface of one or more printed circuit boards, patch antennas, phased array antennas, etc. The antenna(s) 416 may have one or more panels designed for one or more specific frequency bands, such as bands in FR1 or FR2.

The user interface 408 includes various input/output (I/O) devices designed to enable user interaction with the UE 400. The user interface 408 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs), or more complex outputs such as display devices or touchscreens (for example, liquid crystal displays "LCDs," LED displays, quantum dot displays, projectors, etc.), with the output of characters, graphics, multimedia objects, and the like being generated or produced from the operation of the UE 400.

The sensors 410 may include devices, modules, or subsystems whose purpose is to detect events or changes in its environment and send the information (sensor data) about the detected events to some other device, module, subsystem, etc. Examples of such sensors include, inter alia, inertia measurement units including accelerometers, gyroscopes, or magnetometers; microelectromechanical systems or nanoelectromechanical systems including 3-axis accelerometers, 3-axis gyroscopes, or magnetometers; level sensors; temperature sensors (for example, thermistors); pressure sensors; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 412 may include software and hardware elements that operate to control particular devices that are embedded in the UE 400, attached to the UE 400, or otherwise communicatively coupled with the UE 400. The driver circuitry 412 may include individual drivers allowing other components to interact with or control various input/output (I/O) devices that may be present within, or connected to, the UE 400. For example, driver circuitry 412 may include a display driver to control and allow access to a display device, a touchscreen driver to control and allow access to a touchscreen interface, sensor drivers to obtain sensor readings of sensors 410 and control and allow access to sensors 410, drivers to obtain actuator positions of electro-mechanic components or control and allow access to the electro-mechanic components, a camera driver to control and allow access to an embedded image capture device, audio drivers to control and allow access to one or more audio devices.

The PMIC 414 may manage power provided to various components of the UE 400. In particular, with respect to the processor 402, the PMIC 414 may control power-source selection, voltage scaling, battery charging, or DC-to-DC conversion.

In some implementations, the PMIC 414 may control, or otherwise be part of, various power saving mechanisms of the UE 400. A battery 418 may power the UE 400, although in some examples the UE 400 may be mounted deployed in a fixed location and may have a power supply coupled to an electrical grid. The battery 418 may be a lithium ion battery, a metal-air battery, such as a zinc-air battery, an aluminum-air battery, a lithium-air battery, and the like. In some implementations, such as in vehicle-based applications, the battery 418 may be a typical lead-acid automotive battery.

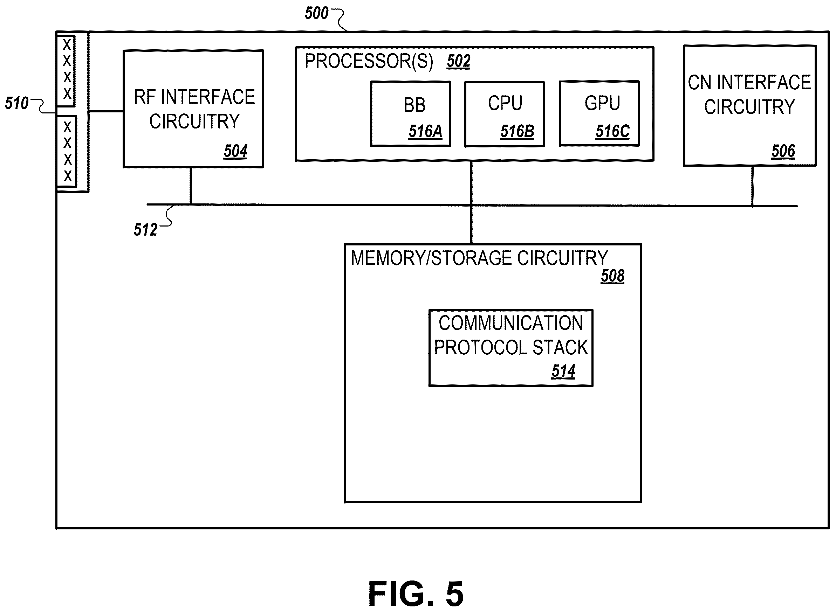

FIG. 5 illustrates an example access node 500 (e.g., a base station or gNB), according to some implementations. The access node 500 may be similar to and substantially interchangeable with base station 104. The access node 500 may include one or more of processor 502, RF interface circuitry 504, core network (CN) interface circuitry 506, memory/storage circuitry 508, and one or more antenna(s) 510. The processor 502 may include any type of circuitry or processor circuitry that executes or otherwise operates computer-executable instructions, such as program code, software modules, or functional processes from memory/storage circuitry 508 to cause the access node 500 to perform operations as described herein.

The components of the access node 500 may be coupled with various other components over one or more interconnects 512. The processor 502, RF interface circuitry 504, memory/storage circuitry 508 (including communication protocol stack 514), antenna(s) 510, and interconnects 512 may be similar to like-named elements shown and described with respect to FIG. 4. For example, the processor 502 may include processor circuitry such as, for example, baseband processor circuitry (BB) 516A, central processor unit circuitry (CPU) 516B, and graphics processor unit circuitry (GPU) 516C.

The CN interface circuitry 506 may provide connectivity to a core network, for example, a 5th Generation Core network (5GC) using a 5GC-compatible network interface protocol such as carrier Ethernet protocols, or some other suitable protocol. Network connectivity may be provided to/from the access node 500 via a fiber optic or wireless backhaul. The CN interface circuitry 506 may include one or more dedicated processors or FPGAs to communicate using one or more of the aforementioned protocols. In some implementations, the CN interface circuitry 506 may include multiple controllers to provide connectivity to other networks using the same or different protocols.

As used herein, the terms "access node," "access point," or the like may describe equipment that provides the radio baseband functions for data and/or voice connectivity between a network and one or more users. These access nodes can be referred to as BS, gNBs, RAN nodes, eNBs, NodeBs, RSUs, TRxPs or TRPs, and so forth, and can include ground stations (e.g., terrestrial access points) or satellite stations providing coverage within a geographic area (e.g., a cell). As used herein, the term "NG RAN node" or the like may refer to an access node 500 that operates in an NR or 5G system (for example, a gNB), and the term "E-UTRAN node" or the like may refer to an access node 500 that operates in an LTE or 4G system (e.g., an eNB). According to various implementations, the access node 500 may be implemented as one or more of a dedicated physical device such as a macrocell base station, and/or a low power (LP) base station for providing femtocells, picocells or other like cells having smaller coverage areas, smaller user capacity, or higher bandwidth compared to macrocells.

In some implementations, all or parts of the access node 500 may be implemented as one or more software entities running on server computers as part of a virtual network, which may be referred to as a CRAN and/or a virtual baseband unit pool (vBBUP). In V2X scenarios, the access node 500 may be or act as a "Road Side Unit." The term "Road Side Unit" or "RSU" may refer to any transportation infrastructure entity used for V2X communications. An RSU may be implemented in or by a suitable RAN node or a stationary (or relatively stationary) UE, where an RSU implemented in or by a UE may be referred to as a "UE-type RSU," an RSU implemented in or by an eNB may be referred to as an "eNB-type RSU," an RSU implemented in or by a gNB may be referred to as a "gNB-type RSU," and the like.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

For one or more embodiments, at least one of the components set forth in one or more of the preceding figures may be configured to perform one or more operations, techniques, processes, or methods. For example, the baseband circuitry as described above in connection with one or more of the preceding figures may be configured to operate in accordance with one or more of the examples set forth herein. For another example, circuitry associated with a UE, base station, network element, etc., as described above in connection with one or more of the preceding figures may be configured to operate in accordance with one or more of the examples set forth herein.

Example 1 is a method including: receiving a measurement resource configuration for a user equipment (UE)-initiated beam measurement event, the measurement resource configuration comprising at least one of a current beam configuration for a current beam or a new beam configuration for a new beam, and detecting, using the measurement resource configuration, that the UE-initiated beam measurement event has occurred.

Example 2 includes the method of example 1, where the UE-initiated beam measurement event occurs when a quality of the new beam is a threshold value better than a quality of the current beam.

Example 3 includes the method of example 1 or 2, where the current beam configuration is indicated in a carrier field of the measurement resource configuration, and where the current beam configuration comprises a first component carrier in which an indicated Transmission Configuration Indicator (TCI) state is applied.

Example 4 includes the method of example 3, further including deriving, from the first component carrier, a second component carrier that transmits a Quasi Co Location (QCL) source of the indicated TCI state, and deriving, based on a determination that reference signals for the current beam and the new beam are in the same component carrier, a third component carrier for the new beam from the second component carrier.

Example 5 includes the method of any previous example, where the new beam configuration is indicated in a dedicated field of the measurement resource configuration.

Example 6 includes the method of any previous example, where the new beam configuration is indicated in a carrier field of the measurement resource configuration, and where the current beam configuration is indicated in a dedicated field of the measurement resource configuration.

Example 7 includes the method of example 6, where a reference signal for the new beam and a reference signal for the current beam are configured in the same component carrier.

Example 8 includes the method of example 6 or 7, where the current beam configuration comprises a first component carrier in which an indicated Transmission Configuration Indicator (TCI) state is applied.

Example 9 includes the method of any previous example, where the UE-initiated beam measurement event is when quality of the new beam becomes a threshold value better than a reference signal derived from an activated Transmission Configuration Indicator (TCI) state.

Example 10 includes the method of example 9, where the new beam configuration is indicated in a carrier field of the measurement resource configuration, and where the current beam configuration is indicated in a dedicated field of the measurement resource configuration.

Example 11 includes the method of example 10, where a reference signal for the new beam and a reference signal for the current beam are configured in the same component carrier.

Example 12 includes the method of example 10 or 11, where the current beam configuration comprises a first component carrier in which the indicated TCI state is applied.

Example 13 includes the method of any previous example, further including responsive to detecting that the UE-initiated beam measurement event has occurred, sending to a base station an indication of the detection in a first Physical Uplink Control Channel (PUCCH) channel.

Example 14 includes the method of example 13, where the first PUCCH channel has a format of PUCCH format 0 or PUCCH format 1.

Example 15 includes the method of example 13 or 14, where the UE is configured with one or more collision rules for the first PUCCH channel.

Example 16 is a method including: receiving a measurement resource configuration for a user equipment (UE)-initiated beam measurement event, the measurement resource configuration comprising at least one of a current beam configuration for a current beam or a new beam configuration for a new beam, and detecting, based on the measurement resource configuration, that the UE-initiated beam measurement event has occurred.

Example 17 includes the method of example 16, where the UE-initiated beam measurement event is when a quality of the new beam becomes a threshold value better than the current beam.

Example 18 includes the method of example 16 or 17, where the current beam configuration is indicated in a carrier field of the measurement resource configuration, and where the current beam configuration comprises a first component carrier in which an indicated Transmission Configuration Indicator (TCI) state is applied.

Example 19 includes the method of example 18, further including deriving, from the first component carrier, a second component carrier that transmits a Quasi Co Location (QCL) source of the indicated TCI state, and deriving, based on a determination that reference signals for the current beam and the new beam are in the same component carrier, a third component carrier for the new beam from the second component carrier.

Example 20 includes the method of example 19, where the third component carrier and the second component carrier are the same.

Example 21 includes the method of any of examples 16 to 20, where the new beam configuration is indicated in a dedicated field of the measurement resource configuration.

Example 22 includes the method of any of examples 16 to 21, where the new beam configuration is indicated in a carrier field of the measurement resource configuration, and where the current beam configuration is indicated in a dedicated field of the measurement resource configuration.

Example 23 includes the method of example 22, where a reference signal for the new beam and a reference signal for the current beam are in the same component carrier.

Example 24 includes the method of any of examples 16 to 23, where the UE-initiated beam measurement event is when a quality of the current beam is worse than a predetermined threshold.

Example 25 includes the method of example 24, where the current beam configuration is indicated in a carrier field of the measurement resource configuration.

Example 26 includes the method of any of examples 16 to 25, where the UE-initiated beam measurement event is when quality of the new beam becomes a threshold value better than a reference signal derived from an activated Transmission Configuration Indicator (TCI) state.

Example 27 includes the method of example 26, where the activated TCI state configuration is indicated in a carrier field of the measurement resource configuration, and where the activated TCI state configuration comprises a first component carrier in which the activated TCI state is applied.

Example 28 includes the method of example 27, further including deriving, from the first component carrier, a second component carrier that transmits a Quasi Co Location (QCL) source of the activated TCI state, and deriving, based on a determination that reference signals for the activated TCI state and the new beam are in the same component carrier, a third component carrier for the new beam from the second component carrier.

Example 29 includes the method of example 28, where the third component carrier and the second component carrier are the same.

Example 30 includes the method of any of examples 26 to 29, where the new beam configuration is indicated in a dedicated field of the measurement resource configuration.

Example 31 includes the method of any of examples 26 to 30, where the new beam configuration is indicated in a carrier field of the measurement resource configuration, and where the current beam configuration is indicated in a dedicated field of the measurement resource configuration.

Example 32 includes the method of example 31, where a reference signal for the new beam and a reference signal for the current beam are in the same component carrier.

Example 33 includes the method of any of examples 16 to 32, where the UE-initiated beam measurement event involves a comparison of the current beam and the new beam, and where the measurement resource configuration further comprises a respective periodicity of the current beam and a respective periodicity of the new beam.

Example 34 includes the method of example 33, where the respective periodicity of the current beam is the same the respective periodicity of the new beam.

Example 35 includes the method of example 33 or 34, where the respective periodicity of the current beam is different from the respective periodicity of the new beam, and where the periodicity of the new beam and the current beam are integer multiples of each other.

Example 36 includes the method of any of examples 33 to 35, where the respective periodicity of the current beam is different from the respective periodicity of the new beam, and the method further including determining comparison evaluation periodicity based on: a smallest periodicity in the measurement resource configuration, a largest periodicity in the measurement resource configuration, a Least Common Multiple (LCM) of the respective periodicities in the measurement resource configuration, a predetermined value, or a configuration received from a network.

Example 37 includes the method of any of examples 16 to 36, further including responsive to detecting that the UE-initiated beam measurement event has occurred, sending to a base station an indication of the detection in a first Physical Uplink Control Channel (PUCCH) channel.

Example 38 includes the method of example 37, where the first PUCCH channel has a format of PUCCH format 0 or PUCCH format 1.

Example 39 includes the method of example 37 or 38, where the UE is configured with one or more collision rules for the first PUCCH channel.

Example 40 includes the method of example 39, where the one or more collision rules comprise a collision rule for a collision between the first PUCCH channel and a regular scheduling request (SR).

Example 41 includes the method of example 39 or 40, where the one or more collision rules comprise a collision rule for a collision between the first PUCCH channel and a Link Recovery Request (LRR) scheduling request.

Example 42 includes the method of any of examples 24 to 41, where the one or more collision rules comprise a collision rule for a collision between the UE-initiated beam measurement event and one or more other UE-initiated beam measurement events.

Example 43 includes the method of any of examples 39 to 42, where the one or more collision rules comprise collision rules for collisions between the first PUCCH channel and: (i) a dynamically scheduled PUSCH, or (ii) a configured grant scheduled PUSCH.

Example 44 may include one or more non-transitory computer-readable media including instructions to cause an electronic device, upon execution of the instructions by one or more processors of the electronic device, to perform one or more elements of a method described in or related to any of examples 1-43, or any other method or process described herein.

Example 45 may include an apparatus including logic, modules, and/or circuitry (e.g., processing circuitry) to perform one or more elements of a method described in or related to any of examples 1-43, or any other method or process described herein.

Example 46 may include a method, technique, or process as described in or related to any of examples 1-43, or portions or parts thereof.

Example 47 may include an apparatus including: one or more processors and one or more computer-readable media including instructions that, when executed by the one or more processors, cause the one or more processors to perform the method, techniques, or process as described in or related to any of examples 1-43, or portions thereof.

Example 48 may include a computer program including instructions, wherein execution of the program by a processing element is to cause the processing element to carry out the method, techniques, or process as described in or related to any of examples 1-43, or portions thereof. The operations or actions performed by the instructions executed by the processing element can include the methods of any one of examples 1-43.

Example 49 may include a method of communicating in a wireless network as shown and described herein.

Example 50 may include a system for providing wireless communication as shown and described herein. The operations or actions performed by the system can include the methods of any one of examples 1-43.

Example 51 may include a device for providing wireless communication as shown and described herein. The operations or actions performed by the device can include the methods of any one of examples 1-43.

Example 52 may include a baseband processor configured to, when executing instructions stored in a memory, perform operations comprising: receiving a measurement resource configuration for a user equipment (UE)-initiated beam measurement event, the measurement resource configuration comprising at least one of a current beam configuration for a current beam or a new beam configuration for a new beam; and detecting, using the measurement resource configuration, that the UE-initiated beam measurement event has occurred.

Example 53 may include the baseband processor of example 52, wherein the UE-initiated beam measurement event occurs when a quality of the new beam is a threshold value better than a quality of the current beam.

Example 54 may include the baseband processor of example 52 or 53, wherein the new beam configuration is indicated in a carrier field of the measurement resource configuration, and wherein the current beam configuration is indicated in a dedicated field of the measurement resource configuration.

Example 55 may include the baseband processor of example 54, wherein the current beam configuration comprises a first component carrier in which an indicated Transmission Configuration Indicator (TCI) state is applied.

Example 56 may include a user equipment (UE) comprising a memory; and a processor coupled to the memory and configured to, when executing instructions stored in the memory, cause the UE to: receive a measurement resource configuration for a user equipment (UE)-initiated beam measurement event, the measurement resource configuration comprising at least one of a current beam configuration for a current beam or a new beam configuration for a new beam; and detect, using the measurement resource configuration, that the UE-initiated beam measurement event has occurred.

The previously-described examples 1-43 are implementable using a computer-implemented method; a non-transitory, computer-readable medium storing computer-readable instructions to perform the computer-implemented method; and a computer system including a computer memory interoperably coupled with a hardware processor configured to perform the computer-implemented method or the instructions stored on the non-transitory, computer-readable medium.

An apparatus, e.g., a user equipment, including one or more baseband processors, and so forth, can be configured to perform particular operations or actions by virtue of having software, firmware, hardware, and/or a combination of them that in operation causes or cause the apparatus to perform the actions. The operations or actions performed by the apparatus can include the methods of any one of examples 1-43.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

## Claims

1. A method comprising:
receiving a measurement resource configuration for a user equipment (UE)-initiated beam measurement event, the measurement resource configuration comprising at least one of a current beam configuration for a current beam or a new beam configuration for a new beam; and
detecting, using the measurement resource configuration, that the UE-initiated beam measurement event has occurred.

2. The method of claim 1, wherein the UE-initiated beam measurement event occurs when a quality of the new beam is a threshold value better than a quality of the current beam.

3. The method of claim 1 or 2, wherein the current beam configuration is indicated in a carrier field of the measurement resource configuration, and wherein the current beam configuration comprises a first component carrier in which an indicated Transmission Configuration Indicator (TCI) state is applied.

4. The method of claim 3, further comprising:
deriving, from the first component carrier, a second component carrier that transmits a Quasi Co Location (QCL) source of the indicated TCI state;
deriving, based on a determination that reference signals for the current beam and the new beam are in the same component carrier, a third component carrier for the new beam from the second component carrier.

5. The method of any preceding claim, wherein the new beam configuration is indicated in a dedicated field of the measurement resource configuration.

6. The method of any preceding claim, wherein the new beam configuration is indicated in a carrier field of the measurement resource configuration, and wherein the current beam configuration is indicated in a dedicated field of the measurement resource configuration.

7. The method of claim 6, wherein a reference signal for the new beam and a reference signal for the current beam are configured in the same component carrier.

8. The method of claim 6 or 7, wherein the current beam configuration comprises a first component carrier in which an indicated Transmission Configuration Indicator (TCI) state is applied.

9. The method of any preceding claim, wherein the UE-initiated beam measurement event is when quality of the new beam becomes a threshold value better than a reference signal derived from an activated Transmission Configuration Indicator (TCI) state.

10. The method of claim 9, wherein the new beam configuration is indicated in a carrier field of the measurement resource configuration, and wherein the current beam configuration is indicated in a dedicated field of the measurement resource configuration.

11. The method of claim 10, wherein a reference signal for the new beam and a reference signal for the current beam are configured in the same component carrier.

12. The method of claim 10 or 11, wherein the current beam configuration comprises a first component carrier in which the indicated TCI state is applied.

13. The method of any preceding claim, further comprising:
responsive to detecting that the UE-initiated beam measurement event has occurred, sending to a base station an indication of the detection in a first Physical Uplink Control Channel (PUCCH) channel.

14. A baseband processor configured to, when executing instructions stored in a memory, perform the method of any of claims 1-13.

15. A user equipment (UE) comprising the baseband processor of claim 14.
